# EUROPEAN PATENT SPECIFICATION

(11) **EP 2 541 356 B1**
(45) Date of publication and mention of the grant of the patent: **28.08.2013**
(21) Application number: 11172103.1
(22) Date of filing: 30.06.2011
(51) Int. Cl.: G05B 23/02

(54) **Processing monitoring data in a monitoring system**
Verfahren zur Datenüberwachung in einem Überwachungssystem
Traitement de données de surveillance dans un système de surveillance

(43) Date of publication of application: 02.01.2013
(73) Proprietor: Axis AB, 223 69 Lund (SE)
(72) Inventor: Rehn, John, 211 28 Malmö (SE); Ståhl, Joachim, 224 72 Lund (SE); Williamsson, Marcus, 224 74 Lund (SE)
(74) Representative: Valea AB

(56) References cited:
- WO-A1-2009/105704
- US-A1- 2006 100 731
- US-A1- 2010 211 192

## Description

### Technical field

The present invention relates to processing data that is obtained by recording units for recording sequences of monitoring data in a monitoring system.

### Background

Monitoring systems, such as video surveillance systems and systems in which ambient conditions such as sound and temperature are monitored, typically generate very large amounts of monitoring data. The monitoring data is usually in the form of time series of data, originating in several detectors and recording units, representing the conditions that are monitored, for example video, thermal video, audio and temperature sequences.

Processing of such monitoring data may entail more or less automatic procedures and analysis algorithms for the purpose of providing a user or operator of the monitoring system with a concise and manageable data set that makes it possible to take action if an undesired condition occurs. Such procedures and algorithms may involve transformation and filtering and any other mathematical treatment of the actual data that is recorded during the monitoring in order to make the data more understandable and easy to handle.

However, notwithstanding this need for handling of the monitoring data itself, it is also desirable from the point of view of a user or operator to obtain information about when the monitoring data has been obtained. This is typically a small problem in situations where the monitoring system comprises a very small number of recording units, and when these units record monitoring data continuously. But where a larger number of recording units are involved and where these units are recording monitoring data in a more or less intermittent manner over longer periods of time, the amount of monitoring data becomes very large and difficult to manage, and the user or operator of the system will find it difficult to get an overview of when the monitoring data has been recorded.

Prior art solutions typically involve textual presentation of monitoring data in the form of lists and tables or graphical presentations in the form of bar charts and other types of charts for presenting statistical summaries of the data. One such system is the NVR system provided by Mirasys Ltd. Examples of such prior art systems can be found in US 2006/100 731 A1, WO 2009/105 704 A1 and US 2010/211 192 A1.

### Summary

In view of the problems discussed above in relation to monitoring systems, there is provided a method for processing monitoring data in a monitoring system. The system comprises a plurality of recording units for recording sequences of monitoring data (e.g. video sequences, thermal video sequences, audio sequences, temperature sequences, metadata related to monitoring data etc.) and a system control station, and the method comprises, in the system control station, obtaining timing information related to each sequence of monitoring data in a plurality of sequences of monitoring data recorded by each of the plurality of recording units. The timing information indicates a respective start time and a stop time for each sequence. A recording unit selection signal is received that indicates a selected recording unit. The timing information is processed together with the recording unit selection signal, the processing comprising displaying, using a first graphic characteristic (e.g. a first color), a graphic representation of said start and stop times for at least a subset of the sequences of monitoring data, and displaying, using a second graphic characteristic different than the first graphic characteristic (e.g. a second color), a graphic representation of said start and stop times for each sequence of monitoring data recorded by the selected recording unit.

Such a method provides advantages in situations where recording units are recording monitoring data in a more or less intermittent manner over longer periods of time. Because the amount of monitoring data in these situations is typically very large, the user or operator of the system in which the method is realized will be able to get an overview of when the monitoring data has been recorded.

The subset of sequences that are displayed using a first graphic characteristic may be created by excluding the sequence recorded by the selected recording unit from the plurality of sequences of monitoring data recorded by each of the plurality of recording units.

The displaying of graphic representations of the start and stop times for each sequence may comprise displaying polygons having a respective size and placement that depend on the start and stop times of each respective sequence.

The displaying of graphic representations of the start and stop times for each sequence may comprise displaying the graphic representations along a timeline, for example superimposed on each other.

Some embodiments include a sequence that comprises a number of steps that commences with creation of a list of list records, each list record comprising the timing information related to one sequence of monitoring data. A respective vector representation of the polygons is then calculated followed by calculation of a respective bitmap corresponding to the vector represented polygons. An aggregated bitmap of bitmaps corresponding to at least a subset of the vector represented polygons is then calculated. The aggregated bitmap is then rendered, using the first graphic characteristic and the bitmap corresponding to the selected recording unit is rendered using the second graphic characteristic.

The obtaining of timing information may comprise sending a request for the timing information to each recording unit and receiving the timing information from each recording unit. Alternatively or additionally, the obtaining of timing information may comprise sending a request for the timing information to a sequence server and receiving the timing information from the sequence server.

In another aspect there is provided a system control station for a monitoring system, the system comprising a plurality of recording units for recording sequences of monitoring data. The system control station comprises control and communication circuitry configured to obtain timing information related to each sequence of monitoring data in a plurality of sequences of monitoring data recorded by each of the plurality of recording units, the timing information indicating a respective start time and a stop time for each sequence, receive a recording unit selection signal indicating a selected recording unit, and process the timing information and the recording unit selection signal. The processing comprises displaying, using a first graphic characteristic, a graphic representation of said start and stop times for at least a subset of the sequences of monitoring data, and displaying, using a second graphic characteristic different than the first graphic characteristic, a graphic representation of said start and stop times for each sequence of monitoring data recorded by the selected recording unit.

In yet another aspect there is provided a monitoring system comprising such a system control station and a plurality of recording units for recording sequences of monitoring data, for example video cameras, audio recording units and temperature recording units.

In yet another aspect there is provided a computer program product comprising software instructions that, when executed in a processing unit, performs the method as summarized above.

These further aspects provide effects and advantages corresponding to those of the method as summarized above.

### Brief description of the drawings

Embodiments will now be described with reference to the attached drawings, where:
figure 1 schematically illustrates a monitoring system,
figure 2 is a flowchart of a method for processing monitoring data in a monitoring system such as the system in figure 1,
figure 3a schematically illustrates timing of recorded monitoring data,
figures 3b and 3c schematically illustrate processed monitoring data that is displayed along a respective timeline, and
figure 4 is a flow chart of a method for processing monitoring data in a monitoring system such as the system in figure 1.

### Detailed description of embodiments

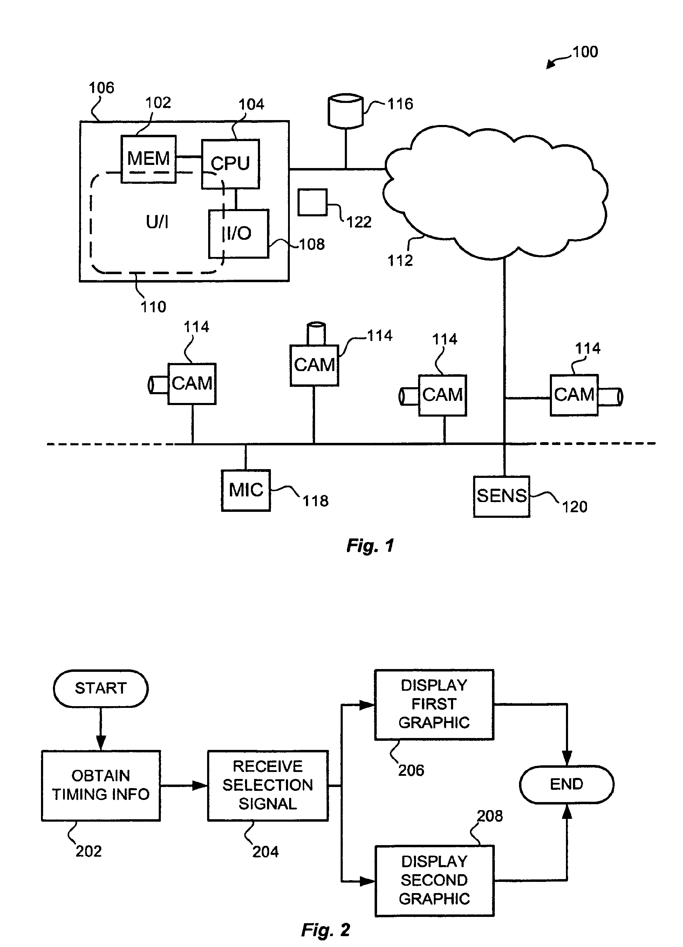

With reference to figure 1, a monitoring system 100 comprises a control station 106, a storage unit 116 for storing monitoring data, a number of recording units for recording sequences of monitoring data including digital video cameras 114, audio recording units 118 and sensors 120 for sensing ambient conditions such as temperature. The units are interconnected in a digital communication network 112. The control station 106 comprises, from a hardware perspective, a processing unit 104, memory 102 and input/output circuitry 108. Software instructions stored in the memory 102 are configured to control the station 106 and its interaction with the system 100 and implement, when executed by the processor and in combination with the hardware units, a user interface 110. The user interface includes a display for displaying video data and other information, including monitoring data, to a user or operator. The skilled person will realize that the user interface 110 may include other input/output units, including keypads, keyboards, loudspeakers etc that enable an operator of the control station 106 to interact with the monitoring system 100.

The network 112 is of a type suitable for communicating digital data from the recording units 114, 118, 120 and signaling information between the control station 106 and the recording units. For example, the network 112 may be any combination of local area networks and wide area networks, wired as well as wireless, that are configured to convey digital data according to any suitable network protocols known in the art, such as the Internet Protocol (IP) suite and other telecommunication protocols, including any communication protocols established within the framework of 3GPP. Consequently, any of the communicating units 106, 114, 116, 118 and 120 may be connected via wired as well as wireless communication means, such as Ethernet wired communication means and/or wireless means capable of communicating under any of the IEEE 802.11 set of standards and/or the 3GPP standards.

The cameras 114 may be any suitable digital camera capable of generating video sequences and communicating the video sequences, or other type of image data, such as image and video metadata, over the network 112 to the control station 106. The cameras 114 may comprise image storage memory for storing a plurality of images. The cameras 114 comprise a lens system for collecting incident light, an image sensor, for example in the form of a Charge Coupled Device (CCD), a CMOS-sensor or similar sensor, for registering incident light and/or thermal radiation, as well as circuitry as is known in the art (and therefore not illustrated in detail in figure 1). For example, the circuitry typically includes an image processing module (implemented in hardware, software, or any combination thereof), an image/video encoder, a processing unit that manages, for example video analytics, memory, and a network interface for connection to the network 112. The image/video encoder is arranged to encode captured digital image data into any one of a plurality of known formats for continuous video sequences, for limited video sequences, for still images or for streamed images/video. For instance, the image information may be encoded into MPEG1, MPEG2, MPEG4, H.264, JPEG, M-JPEG, bitmapped, etc.

Although the monitoring data generated by the cameras typically is in the form of video sequences, the monitoring data may also be in the form of or at least include metadata. Such metadata may be any kind of information related to video data recorded by the cameras. For example, processing in the cameras may involve detecting movement in the scene recorded by the cameras and metadata may then be in the form of information regarding this detected movement.

The audio recording units 118 may be any suitable microphone equipped unit and may in some cases be incorporated in a video camera such as any of the cameras 114. Similarly, the sensors 120 for sensing ambient conditions, such as temperature, may be of any suitable type.

The monitoring data storage unit 116 is capable of communicating sequences of monitoring data over the network 112 with the control station 106 and the recording units 114, 118, 120. The storage unit 116 may form a functional part of the control station 106 and also be completely integrated in the control station 106.

Turning now to figure 2, a method in a system, such as the system 100 in figure 1, will be described in some detail. The method implements a method as summarized above and commence with an obtaining step 202 in which timing information is obtained. The timing information is related to each sequence of monitoring data in a plurality of sequences of monitoring data recorded by each of a plurality of recording units, such as the recording units described above in connection with figure 1. The timing information indicates a respective start time and a stop time for each sequence. The timing information may be part of descriptive metadata associated with the actual monitoring data.

A recording unit selection signal is received, in a reception step 204, which indicates a selected recording unit. The selection signal may originate in an action taken by a user or operator interacting with a user interface in a control station such as the control station 106 in figure 1. For example, the selection signal may reflect the wish of the user or operator to view the timing of a video sequence recorded by a camera such as any of the cameras 114 in figure 1.

The timing information that was obtained in the obtaining step 202 is then processed together with the recording unit selection signal that was obtained in the reception step 204. The processing takes place in two steps that may operate in parallel or in sequence. In a first display step 206, displaying takes place, using a first graphic characteristic (e.g. a first color), of a graphic representation of said start and stop times for at least a subset of the sequences of monitoring data. In a second display step 208, displaying takes place, using a second graphic characteristic different than the first graphic characteristic (e.g. a second color), of a graphic representation of said start and stop times for each sequence of monitoring data recorded by the selected recording unit.

The method may be realized in the form of a computer program product 122 comprising software instructions that are configured such that they can be loaded into the memory 102 and executed in the processing unit 104.

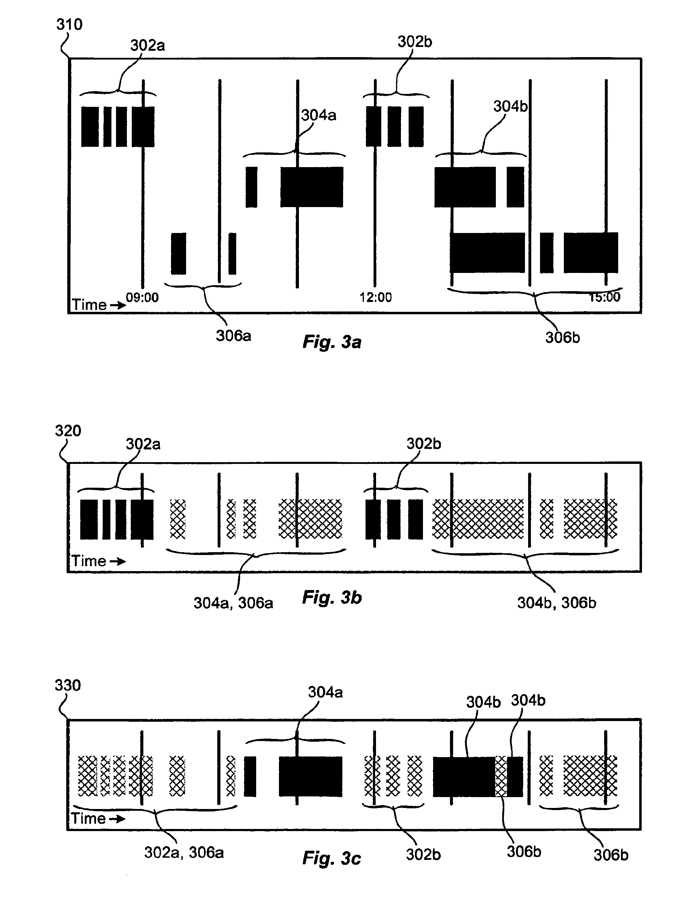

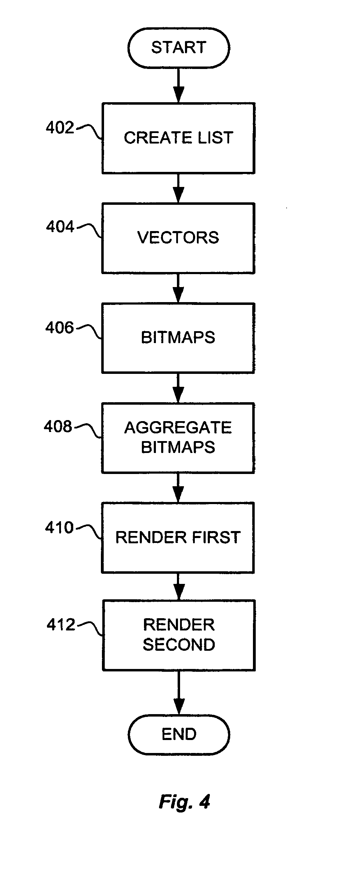

Turning now to figures 3a-c and figure 4, a more detailed embodiment will be described in which monitoring data in a monitoring system is processed. The method commences with a creation step 402 in which a list of list records is created, where each list record comprises timing information related to one sequence of monitoring data. Figure 3a illustrates a timeline 310 comprising illustrations of timing of monitoring data recorded by three recording units, such as any of the recording units 114, 118, 120 in figure 1. A first group 302a of recorded sequences and a second group 302b of recorded sequences are illustrated. The first and second groups 302a, 302b are recorded by a first recording unit. Noting the time scale of the timeline 310, it can be seen that the groups 302a, 302b of recorded sequences are in the order of several minutes in duration and intermittently distributed in time, having gaps ranging from a few minutes (as illustrated by the gaps between the sequences within each group 302a, 302b) to a few hours (as illustrated by the gap from around 9:00 to around 12:00 between the first group 302a and the second group 302b).

Groups 304a, 304b, 306a, 306b of sequences recorded by a respective second and third recording unit are illustrated in the timeline 310 in the same manner as that of the groups 302a, 302b recorded by the first recording unit. Of course, the time scale of interest may depend on the particular situation in which a monitoring system is operating.

Continuing with the flow of the embodiment of the method, a respective vector representation of the polygons is then calculated in a vector calculation step 404. The actual algorithm for this calculation is outside the scope of the present disclosure.

The calculation step 404 is followed by a bitmap calculation step 406 in which calculation of a respective bitmap takes place, where the bitmaps correspond to the vector represented polygons. The actual algorithm for this calculation is outside the scope of the present disclosure.

An aggregated bitmap of bitmaps corresponding to at least a subset of the vector represented polygons is then calculated in an aggregate bitmap calculation step 408. For example, as will be illustrated in connection with a description of figure 3b, the aggregated bitmap may consist of the bitmaps representing the polygons of the groups 304a, 304b, 306a and 306b. Similarly, as will be illustrated in connection with a description of figure 3c, the aggregated bitmap may consist of the bitmaps representing the polygons of the groups 302a, 302b, 306a and 306b.

The aggregated bitmap is then rendered in a first rendering step 410, using the first graphic characteristic and the bitmap corresponding to a selected recording unit is rendered in a second rendering step 412 using the second graphic characteristic.

Figure 3b and figure 3c illustrate the appearance of a display (e.g. a display in a user interface in a control unit such as the control unit 106 in figure 1) showing a respective timeline 320 and 330 along which timing information related to monitoring data from a respective selected recording unit is displayed together with timing information related to monitoring data from other recording units. The time scale in figures 3b and 3c is the same as in figure 3a.

In figure 3b, the selected recording unit is the first recording unit that has recorded first and the second groups 302a, 302b of monitoring data. Timing information for the monitoring data from the selected recording unit has been processed as described above and graphic representations in the form of black polygons are displayed along the timeline 320. Timing information for the monitoring data from the second and third recording units have also been processed as described above and graphic representations in the form of groups of gray polygons 304a, 306a, 304b, 306b are displayed along the timeline 320 superimposed with the black polygons representing the selected recording unit.

In figure 3c, the selected recording unit is the second recording unit that has recorded first and the second groups 304a, 304b of monitoring data. Timing information for the monitoring data from the selected recording unit has been processed as described above and graphic representations in the form of black polygons are displayed along the timeline 330. Timing information for the monitoring data from the first and third recording units have also been processed as described above and graphic representations in the form of groups of gray polygons 302a, 306a, 302b, 306b are displayed along the timeline 330 superimposed with the black polygons representing the selected recording unit.

As clearly illustrated in figure 3b and figure 3c, a user or operator of the system in which the method is realized will be provided with an easy to read overview of when monitoring data pertaining to a selected recording unit has been recorded. By performing a sequence of selecting one recording unit after another, for example by pressing a recording unit selection button in a user interface in a control station, the user or operator will be able to quickly switch between views of timing information for each recording unit in the selection sequence.

The process described with reference to figure 4 is one example of a sequence of steps that provides the advantages as summarized above. However, variations of the procedure may involve an aggregation step where polygons are aggregated before bitmap calculation takes place.

Yet another variation may be a procedure where no aggregation takes place. Such a procedure may entail creation of individual bitmaps from polygons followed by rendering of the bitmaps one by one. In such a procedure, the rendering takes place using a first (or at least similar) graphic characteristic for all but the last rendering. The last rendering with the use of a graphic characteristic that differs from the graphic characteristics of the already rendered polygons, is the rendering of the polygons representing the selected recording unit. That is, the last rendering may be seen as taking place "on top of" the already rendered polygons.

## Claims

1. A method for processing monitoring data in a monitoring system (100), the system comprising a plurality of recording units (114, 118, 1210) for recording sequences of monitoring data (302, 304, 306) and a system control station (106), the method comprising, in the system control station:
- obtaining (202) timing information related to each sequence of monitoring data in a plurality of sequences of monitoring data recorded by each of the plurality of recording units, the timing information indicating a respective start time and a stop time for each sequence,
- receiving (204) a recording unit selection signal indicating a selected recording unit,
- processing the timing information and the recording unit selection signal, the processing comprising:
- displaying (206) along a timeline (320, 330), using a first graphic characteristic, a graphic representation of said start and stop times for at least a subset of the sequences of monitoring data, and the method being **characterized by**
- displaying (208) along the timeline (320, 330), using a second graphic characteristic different than the first graphic characteristic, a graphic representation of said start and stop times for each sequence of monitoring data recorded by the selected recording unit,
wherein:
- the displaying of graphic representations of said start and stop times for each sequence along the timeline (320, 330) comprises displaying the graphic representations superimposed on each other.

2. The method of claim 1, comprising:
- creating the subset of sequences that are displayed using a first graphic characteristic by excluding the sequence recorded by the selected recording unit from said plurality of sequences of monitoring data recorded by each of the plurality of recording units.

3. The method of claim 1 or 2, wherein the displaying of graphic representations of said start and stop times for each sequence comprises displaying polygons having a respective size and placement that depend on the start and stop times of each respective sequence.

4. The method of claim 3, comprising:
- creating (402) a list of list records, each list record comprising the timing information related to one sequence of monitoring data, and wherein the processing of the timing information comprises:
- calculating (404) a respective vector representation of the polygons,
- calculating (406) a respective bitmap corresponding to the vector represented polygons,
- calculating (408) an aggregated bitmap of bitmaps corresponding to at least a subset of the vector represented polygons,
- rendering (410) the aggregated bitmap, using the first graphic characteristic,
- rendering (412) the bitmap corresponding to the selected recording unit, using the second graphic characteristic.

5. The method of any of claims 1-4, wherein the first graphic characteristic is a first color and the second graphic characteristic is a second color.

6. The method of any of claims 1-5, wherein the obtaining of timing information comprises:
- sending a request for the timing information to each recording unit,
- receiving the timing information from each recording unit.

7. The method of any of claims 1-6, wherein the obtaining of timing information comprises:
- sending a request for the timing information to a sequence server,
- receiving the timing information from the sequence server.

8. The method of any of claims 1-7, wherein the sequences of monitoring data comprise any of video sequences, thermal video sequences, audio sequences and temperature sequences.

9. The method of any of claims 1-8, wherein the sequences of monitoring data comprise metadata related to the monitoring data.

10. A system control station (106) for a monitoring system (100), the system comprising a plurality of recording units (114, 118, 120) for recording sequences of monitoring data (302, 304, 306), the system control station comprising control and communication circuitry (102, 104, 108) configured to:
- obtain timing information related to each sequence of monitoring data in a plurality of sequences of monitoring data recorded by each of the plurality of recording units, the timing information indicating a respective start time and a stop time for each sequence,
wherein the control and communication circuitry is configured to
- receive a recording unit selection signal indicating a selected recording unit,
- process the timing information and the recording unit selection signal, the processing comprising:
- display along a timeline (320, 330), using a first graphic characteristic, a graphic representation of said start and stop times for at least a subset of the sequences of monitoring data, and the system being **characterized in that** it is further configured to
- display along the timeline (320, 330), using a second graphic characteristic different than the first graphic characteristic, a graphic representation of said start and stop times for each sequence of monitoring data recorded by the selected recording unit, wherein:
- the displaying of graphic representations of said start and stop times for each sequence along the timeline (320, 330) comprises displaying the graphic representations superimposed on each other.

11. A monitoring system (100) comprising a system control station (106) according to claim 10, and a plurality of recording units (114, 118, 120) for recording sequences of monitoring data.

12. The system of claim 11, wherein the plurality of recording units comprises any of video cameras, audio recording units and temperature recording units.

13. A computer program product comprising software instructions that, when executed in a processing unit, performs the method according to any of claims 1 to 9.

## Patentansprüche

1. Ein Verfahren zum Verarbeiten von Überwachungsdaten in einem Überwachungssystem (100), wobei das System mehrere Aufzeichnungseinheiten (114, 118, 1210), zum Aufzeichnen von Sequenzen von Überwachungsdaten (302, 304, 306), und eine Systemkontrollstelle (106) umfasst, wobei das Verfahren in der Systemkontrollstelle umfasst:
- Erhalten (202) von Zeitinformationen bezogen auf jede Sequenz von Überwachungsdaten in mehreren Sequenzen von Überwachungsdaten, die durch jede der mehreren Aufzeichnungseinheiten aufgezeichnet werden, wobei die Zeitinformationen eine jeweilige Startzeit und eine Stopzeit für jede Sequenz anzeigt,
- Empfangen (204) eines Auswahlsignals der Aufzeichnungseinheit, das eine ausgewählte Aufzeichnungseinheit anzeigt,
- Verarbeiten der Zeitinformation und des Auswahlsignals der Aufzeichnungseinheit, wobei das Verarbeiten umfasst:
- Anzeigen (206) entlang einer Zeitachse (320, 330), unter Verwenden eines ersten grafischen Merkmals, einer grafischen Darstellung der Start- und Stopzeiten für mindestens eine Teilmenge der Sequenzen von Überwachungsdaten, und
wobei das Verfahren **gekennzeichnet ist durch**
- Anzeigen (208) entlang der Zeitachse (320, 330), unter Verwenden eines zweiten grafischen Merkmals, das von dem ersten grafischen Merkmal verschieden ist, einer grafischen Darstellung der Start- und Stopzeiten für jede Sequenz von Überwachungsdaten, die **durch** die ausgewählte Aufzeichnungseinheit aufgezeichnet wurden,
wobei:
- das Anzeigen der grafischen Darstellungen der Start- und Stopzeiten für jede Sequenz entlang der Zeitachse (320, 330) ein übereinandergelagertes Anzeigen der grafische Darstellungen umfasst.

2. Das Verfahren gemäß Anspruch 1, umfassend:
- Erstellen der Auswahl an Sequenzen, die angezeigt werden, unter verwenden eines ersten grafischen Merkmals, durch Ausschließen der Sequenz, die durch die ausgewählte Aufzeichnungseinheiten aufgezeichnet wird, von den mehreren Sequenzen von Überwachungsdaten, die durch jede der mehreren Aufzeichnungseinheiten aufgezeichnet werden.

3. Das Verfahren gemäß Anspruch 1 oder 2, wobei das Anzeigen der grafischen Darstellungen der Start- und Stopzeiten für jede Sequenz Anzeigen von Polygonen, die eine jeweilige Größe und Platzierung, die von den Start- und Stopzeiten der jeweiligen Sequenz abhängig sind, umfasst.

4. Das Verfahren gemäß Anspruch 3, umfassend:
- Erzeugen (402) einer Liste an Listeneintragungen, wobei jeder Listeneintrag die Zeitinformation bezogen auf eine Sequenz von Überwachungsdaten umfasst, und wobei das Verarbeiten der Zeitinformation umfasst:
- Berechnen (404) einer jeweiligen Vektordarstellung der Polygone,
- Berechnen (406) einer jeweiligen Bitmap, die zu den durch den Vektor dargestellten Polygonen korrespondiert,
- Berechnen (408) einer aggregierten Bitmap an Bitmaps, die zumindest zu einer Teilmenge der durch den Vektor dargestellten Polygone korrespondiert,
- Rendern (410) der aggregierten Bitmap, unter Verwenden des ersten grafischen Merkmals,
- Rendern (412) der Bitmap, die zu der ausgewählten Aufzeichnungseinheit korrespondiert, unter Verwenden des zweiten grafischen Merkmals.

5. Das Verfahren gemäß einem der Ansprüche 1 bis 4, wobei das erste grafische Merkmal eine ersten Farbe ist und das zweite grafische Merkmal eine zweite Farbe ist.

6. Das Verfahren gemäß einem der Ansprüche 1 bis 5, wobei das Erhalten der Zeitinformationen umfasst:
- Senden einer Anfrage über die Zeitinformation an jede Aufzeichnungseinheit,
- Empfangen der Zeitinformation von jeder Aufzeichnungseinheit.

7. Das Verfahren gemäß einem der Ansprüche 1 bis 6, wobei der Erhalten der Zeitinformationen umfasst:
- Senden einer Anfrage über die Zeitinformation zu einem Sequenzserver,
- Empfangen der Zeitinformation von dem Sequenzserver.

8. Das Verfahren gemäß einem der Ansprüche 1 bis 7, wobei die Sequenzen von Überwachungsdaten eine aus Videosequenzen, Wärmebild-Videosequenzen, Audiosequenzen und Temperatursequenzen umfasst.

9. Das Verfahren gemäß einem der Ansprüche 1 bis 8, wobei die Sequenzen von Überwachungsdaten Metadaten, die sich auf die Überwachungsdaten beziehen, umfassen.

10. Eine Systemkontrollstelle (106) für ein Überwachungssystem (100), wobei das System mehrere Aufzeichnungseinheiten (114, 118, 120) zum Aufzeichnen von Sequenzen von Überwachungsdaten (302, 304, 306) umfasst, wobei die Systemkontrollstelle umfassend Kontroll- und Kommunikationsschaltung (102, 104, 108) konfiguriert ist zum:
- Erhalten von Zeitinformationen bezogen auf jede Sequenz von Überwachungsdaten in mehreren Sequenzen von Überwachungsdaten, die durch jede der mehreren Aufzeichnungseinheiten aufgezeichnet werden, wobei die Zeitinformationen eine jeweilige Startzeit und einer Stopzeit für jede Sequenz anzeigen,
wobei die Kontroll- und Kommunikationsschaltung konfiguriert ist, zum
- Erhalten eines Auswahlsignals der Aufzeichnungseinheit, das eine ausgewählte Aufzeichnungseinheit anzeigt,
- Verarbeiten der Zeitinformation und des Auswahlsignals der Aufzeichnungseinheit, wobei das Verarbeiten umfasst:
- Anzeigen entlang einer Zeitachse (320, 330), unter Verwenden eines ersten grafischen Merkmals, einer grafischen Darstellung der Start- und Stopzeiten für mindestens eine Teilmenge der Sequenzen von Überwachungsdaten, und
wobei das System **dadurch gekennzeichnet ist, dass** es ferner konfiguriert ist zum:
- Anzeigen entlang der Zeitachse (320, 330), unter Verwenden eines zweiten grafischen Merkmals, das von dem ersten grafischen Merkmal verschiedenen ist, einer grafischen Darstellung der Startund Stopzeiten für jede Sequenz von Überwachungsdaten, die durch die ausgewählte Aufzeichnungseinheit aufgezeichnet werden, wobei:
- das Anzeigen der grafischen Darstellungen der Start- und Stopzeiten für jede Sequenz entlang der Zeitachse (320, 330) ein übereinandergelagertes Anzeigen der grafische Darstellungen umfasst.

11. Ein Überwachungssystem (100), umfassend eine Systemkontrollstelle (106) gemäß Anspruch 10 und mehrere Aufzeichnungseinheiten (114, 118, 120) zum Aufzeichnen von Sequenzen von Überwachungsdaten.

12. Das System gemäß Anspruch 11, wobei die mehreren Aufzeichnungseinheiten eines aus Videokameras, Audioaufzeichnungseinheiten und Temperaturaufzeichnungseinheiten umfassen.

13. Ein Computerprogrammprodukt, umfassend Softwareinstruktionen, die, wenn ausgeführt in einer Verarbeitungseinheit, das Verfahren gemäß einem der Ansprüche 1 bis 9 durchführen.

## Revendications

1. Procédé de traitement de données de surveillance dans un système de surveillance (100), le système comprenant une pluralité d'unités d'enregistrement (114, 118, 1210) pour enregistrer des séquences de données de surveillance (302, 304, 306) et un poste de commande de système (106), le procédé comprenant, dans le poste de commande du système, les étapes consistant à :
- obtenir (202) des informations de synchronisation qui se rapportent à chaque séquence de données de surveillance dans une pluralité de séquences de données de surveillance enregistrées par chacune de la pluralité d'unités d'enregistrement, les informations de synchronisation indiquant un temps de départ respectif et un temps d'arrêt pour chaque séquence,
- recevoir (204) un signal de sélection d'unité d'enregistrement indiquant une unité d'enregistrement sélectionnée,
- traiter les informations de synchronisation et le signal de sélection d'unité d'enregistrement, le traitement comprenant les étapes consistant à :
- afficher (206) le long d'une ligne chronologique (320, 330), en utilisant une première caractéristique graphique, une représentation graphique desdits temps de départ et d'arrêt pour au moins un sous-ensemble des séquences de données de surveillance, et
le procédé étant **caractérisé par** :
- l'affichage (208) le long de la ligne chronologique (320, 330), en utilisant une seconde caractéristique graphique différente de la première caractéristique graphique, d'une représentation graphique desdits temps de départ et d'arrêt pour chaque séquence de données de surveillance enregistrées par l'unité d'enregistrement sélectionnée,
dans lequel :
- l'affichage de représentations graphiques desdits temps de départ et d'arrêt pour chaque séquence le long de la ligne chronologique (320, 330) comprend l'affichage des représentations graphiques superposées l'une à l'autre.

2. Procédé selon la revendication 1, comprenant :
- la création du sous-ensemble de séquences qui sont affichées en utilisant une première caractéristique graphique en excluant la séquence enregistrée par l'unité d'enregistrement sélectionnée de ladite pluralité de séquences de données de surveillance enregistrées par chacune de la pluralité d'unités d'enregistrement.

3. Procédé selon la revendication 1 ou la revendication 2, dans lequel l'affichage de représentations graphiques desdits temps de départ et d'arrêt pour chaque séquence comprend l'affichage de polygones ayant une taille et une disposition respectives qui dépendent des temps de départ et d'arrêt de chaque séquence respective.

4. Procédé selon la revendication 3, comprenant les étapes consistant à :
- créer (402) une liste d'enregistrements de liste, chaque enregistrement de liste comprenant des informations de synchronisation qui se rapportent à une séquence de données de surveillance et dans lequel le traitement des informations de synchronisation comprend :
- le calcul (404) d'une représentation vectorielle respective des polygones,
- le calcul (406) d'un mode point respectif correspondant aux polygones en représentation vectorielle,
- le calcul (408) d'un mode point collectif de modes points correspondant à au moins un sous-ensemble des polygones à représentation vectorielle,
- le rendu (410) du mode point collectif en utilisant la première caractéristique graphique,
- le rendu (412) du mode point correspondant à l'unité d'enregistrement sélectionnée, en utilisant la seconde caractéristique graphique.

5. Procédé selon l'une quelconque des revendications 1 à 4, dans lequel la première caractéristique graphique est une première couleur et la seconde caractéristique graphique est une seconde couleur.

6. Procédé selon l'une quelconque des revendications 1 à 5, dans lequel l'obtention d'informations de synchronisation comprend :
- l'envoi d'une demande d'informations de synchronisation à chaque unité d'enregistrement,
- la réception des informations de synchronisation de chaque unité d'enregistrement.

7. Procédé selon l'une quelconque des revendications 1 à 6, dans lequel l'obtention d'informations de synchronisation comprend :
- l'envoi d'une demande d'informations de synchronisation à un serveur de séquence,
- la réception des informations de synchronisation du serveur de séquence.

8. Procédé selon l'une quelconque des revendications 1 à 7, dans lequel les séquences de données de surveillance comprennent l'une quelconque de séquences vidéo, de séquences vidéo thermiques, de séquences audio et de séquences de température.

9. Procédé selon l'une quelconque des revendications 1 à 8, dans lequel les séquences de données de surveillance comprennent des métadonnées qui s'apparentent aux données de surveillance.

10. Poste de commande de système (106) pour un système de surveillance (100), le système comprenant une pluralité d'unités d'enregistrement (114, 118, 120) pour enregistrer des séquences de données de surveillance (302, 304, 306), le poste de commande du système comprenant des circuits de commande et de communication (102, 104, 108) configurés pour :
- obtenir des informations de synchronisation se rapportant à chaque séquence de données de surveillance dans une pluralité de séquences de données de surveillance enregistrées par chacune de la pluralité d'unités d'enregistrement, les informations de synchronisation indiquant un temps de départ et un temps d'arrêt respectifs pour chaque séquence,
dans lequel les circuits de commande et de communication sont configurés pour :
- recevoir un signal de sélection d'unité d'enregistrement indiquant une unité d'enregistrement sélectionnée,
- traiter les informations de synchronisation et le signal de sélection d'unité d'enregistrement, le traitement comprenant les étapes suivantes :
- l'affichage le long d'une ligne chronologique (320, 330), en utilisant une première caractéristique graphique, d'une représentation graphique desdits temps de départ et d'arrêt pour au moins un sous-ensemble des séquences de données de surveillance, et
le système étant **caractérisé en ce qu'**il est configuré par ailleurs pour :
- afficher le long de la ligne chronologique (320, 330), en utilisant une seconde caractéristique graphique différente de la première caractéristique graphique, une représentation graphique desdits temps de départ et d'arrêt pour chaque séquence de données de surveillance enregistrée par l'unité d'enregistrement sélectionnée, dans lequel :
- l'affichage de représentations graphiques desdits temps de départ et d'arrêt pour chaque séquence le long de la ligne chronologique (320, 330) comprend l'affichage des représentations graphiques superposées l'une à l'autre.

11. Système de surveillance (100) comprenant un poste de commande de système (106) selon la revendication 10 et une pluralité d'unités d'enregistrement (114, 118, 120) pour enregistrer des séquences de données de surveillance.

12. Système selon la revendication 11, dans lequel la pluralité d'unités d'enregistrement comprend l'une quelconque de caméras vidéo, d'unités d'enregistrement audio et d'unités d'enregistrement de température.

13. Produit de programme informatique comprenant des instructions logicielles qui, lorsqu'elles sont exécutées dans une unité de traitement, effectuent le procédé selon l'une quelconque des revendications 1 à 9.
